(19) Europäisches Patentamt

European Patent Office

Office européen des brevets

(11) **EP 1 516 470 B1**

(12) **EUROPÄISCHE PATENTSCHRIFT**

(45) Veröffentlichungstag und Bekanntmachung des Hinweises auf die Patenterteilung:
**05.10.2005  Patentblatt 2005/40**

(21) Anmeldenummer: 03760586.2

(22) Anmeldetag: **14.05.2003**

(51) Int Cl.⁷: **H04L 27/26**

(86) Internationale Anmeldenummer:
**PCT/EP2003/005068**

(87) Internationale Veröffentlichungsnummer:
**WO 2004/002099 (31.12.2003 Gazette 2004/01)**

(54) **VERFAHREN ZUR ENTZERRUNG UND DEMODULATION EINES ÜBER EINEN ZEITVERÄNDERLICHEN KANAL ÜBERTRAGENEN DATENSIGNALS**

METHOD FOR EQUALISING AND DEMODULATING A DATA SIGNAL WHICH IS TRANSMITTED VIA A TIME-VARIANT CHANNEL

PROCEDE D'EGALISATION ET DE DEMODULATION D'UN SIGNAL DE DONNEES TRANSMIS PAR L'INTERMEDIAIRE D'UN CANAL VARIABLE DANS LE TEMPS

(84) Benannte Vertragsstaaten:
**AT BE BG CH CY CZ DE DK EE ES FI FR GB GR HU IE IT LI LU MC NL PT RO SE SI SK TR**

(30) Priorität: **24.06.2002  DE 10228159**

(43) Veröffentlichungstag der Anmeldung:
**23.03.2005  Patentblatt 2005/12**

(73) Patentinhaber: **Rohde & Schwarz GmbH & Co. KG**
**81671 München (DE)**

(72) Erfinder:
• **BOTT, Rainer**
  **82346 Andechs (DE)**
• **SORGER, Ulrich**
  **64293 Darmstadt (DE)**
• **GLIGOREVIC, Snjezana**
  **64293 Darmstadt (DE)**

(74) Vertreter: **Körfer, Thomas et al**
**Mitscherlich & Partner,**
**Patent- und Rechtsanwälte,**
**Sonnenstrasse 33**
**80331 München (DE)**

(56) Entgegenhaltungen:
WO-A-00/24168          US-A- 6 134 277
US-B1- 6 320 919

• GLIGOREVIC S ET AL: "A new approach to tracking time-variant channels" 5TH INTERNATIONAL SYMPOSIUM ON WIRELESS PERSONAL MULTIMEDIA COMMUNICATIONS. PROCEEDINGS (CAT. NO.02EX568), 5TH INTERNATIONAL SYMPOSIUM ON WIRELESS PERSONAL MULTIMEDIA COMMUNICATIONS, HONOLULU, HI, USA, 27-30 OCT. 2002, Seiten 1342-1345 vol.3, XP002247193 2002, Piscataway, NJ, USA, IEEE, USA ISBN: 0-7803-7442-8
• DIGGAVI S ET AL: "Intercarrier interference in MIMO OFDM" 2002 IEEE INTERNATIONAL CONFERENCE ON COMMUNICATIONS. CONFERENCE PROCEEDINGS. ICC 2002 (CAT. NO.02CH37333), PROCEEDINGS OF IEEE INTERNATIONAL CONFERENCE ON COMMUNICATIONS, NEW YORK, NY, USA, 28 APRIL-2 MAY 2002, Seiten 485-489 vol.1, XP010589542 2002, Piscataway, NJ, USA, IEEE, USA ISBN: 0-7803-7400-2
• WON GI JEON ET AL: "An equalization technique for orthogonal frequency-division multiplexing systems in time-variant multipath channels" IEEE TRANSACTIONS ON COMMUNICATIONS, JAN. 1999, IEEE, USA, Bd. 47, Nr. 1, Seiten 27-32, XP002211507 ISSN: 0090-6778

**Beschreibung**

Die Erfindung betrifft ein Verfahren zur Entzerrung und zur Demodulation eines über einen zeitveränderlichen Kanal zu einem Empfänger übertragenen Datensignals.

Moderne Datenübertragungsverfahren über zeitveränderliche Kanäle (Fading-Kanäle) sind anfällig gegenüber Intersymbolinterferenzen (ISI) oder Interchannelinterferenzen (ICI). Demgemäß ist eine Kanalschätzung und Entzerrung notwendig.

Konventionelle Verfahren zur Kanalschätzung und Entzerrung basieren auf der Schätzung der Kanalimpulsantwort als Zeitfunktion bzw. im Spektralbereich. Diese wird in der Regel direkt mit Hilfe von Training-Sequenzen geschätzt. Das der Schätzung zugrunde liegende Kanalmodell kann entweder nur eine einzige Zeitfunktion modellieren, oder aber über das übliche tapped-delay-Modell verschiedene Pfade mit unterschiedlicher Verzögerung berücksichtigen. Den Modellen und damit Schätzverfahren ist gemeinsam, daß sie die Geometrie der die Verzerrung verursachenden Scatterer (Streuer) nicht berücksichtigen.

Bei Multicarrier-Verfahren, z.B. OFDM, ergeben unterschiedliche Dopplershifts in den einzelnen Pfaden des Kanals ICI, d.h. die benachbarten Träger beeinflussen einen bestimmten Träger. Besitzt der reale Kanal mehrere Pfade mit unterschiedlicher Dopplershift, kann ein konventionelles Verfahren mit der direkten Schätzung des Kanals über dessen Impulsantwort diese verschiedenen Dopplershifts nicht ermitteln. Demgemäß bleibt ICI bestehen und der Empfänger kann das Signal nicht optimal empfangen und verarbeiten.

Die üblichen Annahmen über die zeitliche Änderung des Kanals gehen davon aus, daß sich die Impulsantwort des Kanal zwischen den Training-Sequenzen nur gering bzw. deterministisch ändert und die verwendeten Kanalschätz- und Tracking-Algorithmen hinreichend konvergieren.

Bei Multicarrier-Verfahren, z.B. OFDM, wird implizit vorausgesetzt, daß der Kanal auf einem OFDM-Block konstant ist. Ein Verfahren für die Entzerrung von DVB-T auf der Basis der Annahme der Konstanz ist beispielsweise in Burow-R; Fazel-K; Hoeher-P; Klank-O; Kussmann-H; Pogrzeba-P; Robertson- P; Ruf-M-J "On the performance of the DVB-T system in mobile environments" IEEE GLOBECOM 1998 beschrieben.

Bei sehr schnell veränderlichen Kanälen bedingen die oben angeführten Vorgehensweisen eine schnelle Abfolge von Training-Sequenzen bzw. eine schlechtere Konvergenz der Kanalschätzung. Bei den Multicarrier-Verfahren ist die erwähnte Konstanz auf einem Block nicht mehr gewährleistet, so daß die Performance der Verfahren stark abnimmt.

Es ist daher Aufgabe der Erfindung, ein Verfahren zum Entzerren und zur Demodulation eines über einen solchen zeitveränderlichen Übertragungskanal übertragenen Datensignals zu schaffen, das diese Nachteile und Beschränkungen bezüglich der Eigenschaften des Kanals vermeidet.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Beim erfindungsgemäßen Verfahren wird nicht mehr die Kanalimpulsantwort für die Kanalschätzung benutzt, sondern vielmehr die sogenannten Scatterer-Koeffizienten, nämlich die komplexwertige Dämpfung, die Verzögerung und die Dopplershift im Kanal. Die durch sogenannte Streuer (Scatterer) verursachten Reflexionen eines zwischen Sender und Empfänger ausgestrahlten Signals sind ursächlich für die Qualität des Übertragungskanals, wie dies beispielsweise beschrieben ist in dem Buch von Raymond Steele, "Mobile Radio Communications", Pentech Press, London, 1992, Abschnitt 2.3.1. Solche Scatterer wie Gebäude oder Fahrzeuge verzerren das zwischen Sender und Empfänger übertragene Datensignal. Am verzerrten Datensignal können im Empfänger diese auf die Scatterer zurückzuführenden Scatterer-Koeffizienten ermittelt werden, mit denen dann das verzerrte Datensignal entzerrt und schließlich demoduliert werden kann. Gemäß der Erfindung werden also die Kanaleigenschaften durch diese Scatterer-Koeffizienten definiert, die im Sinne der nachfolgenden Beschreibung auf einfache Weise aus den empfangenen verzerrten Datensignalen ermittelt werden können.

Die Erfindung wird im Folgenden anhand schematischer Zeichnungen an Ausführungsbeispielen näher erläutert. In der Zeichnung zeigen:

Fig. 1   die zweidimensionale Anordnung der Scatterer mit diskretisierten Doppelfrequenzen und Verzögerungen;

Fig. 2   einen Suchbaum und

Fig. 3   einen von dem Suchbaum der Fig. 2 abgeleiteter Baum mit Berücksichtigung der Codierung.

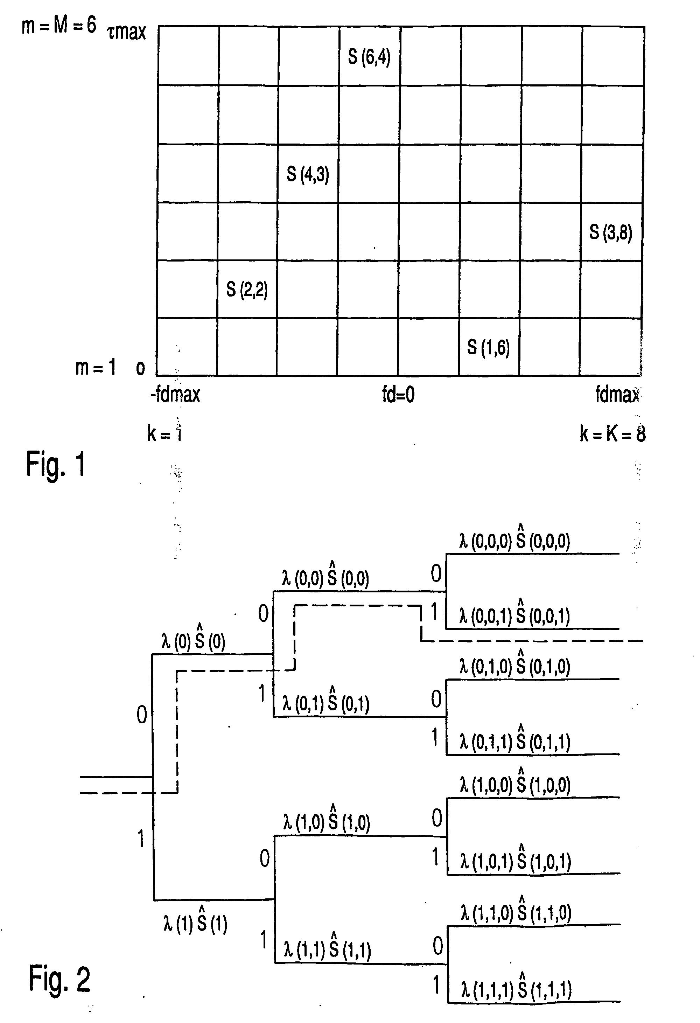

Fig. 1 zeigt anhand eines zweidimensionalen Feldes die Diskretisierung der Dopplerfrequenz $f_d$ und der Verzögerung $\tau$ im Übertragungskanal für verschiedene Scatterer. Diese graphische Darstellung läßt sich unmittelbar in eine Scatterer-Matrix S mit den Scattererkoeffizienten S(m,k) überführen, wie sie in den nachfolgenden Gleichungen (1) bis (4) verwendet wird. Die Koeffizienten der Matrix S stellen die komplexwertigen Dämpfungswerte (Amplitude und Phase) dar. Die Quantisierung in Verzögerungsrichtung $\tau$ und in Dopplershift-Richtung $f_d$ hängt vom Kanal und Datenübertragungsverfahren ab. Die Maximalwerte K für die diskrete normierte Dopplershift und M für die diskrete normierte Verzögerung ergeben sich durch die physikalischen Parameter des Kanals. Wie ersichtlich, ist es vorteilhaft und ohne Beschränkung der Allgemeinheit sinnvoll, daß die Quantisierungen in Verzögerungs- und Dopplershift-Richtung jeweils äquidistant sind. Tritt für einen bestimmten Eintrag kein physikalischer Scatterer auf, so wird der entsprechende Scatterer in der Matrix einfach zu Null gesetzt.

In Fig. 1 sind fünf Scatterer dargestellt, deren Indizes der Position in der Scatterermatrix entsprechen; die Nummerierung beginnt hier mit 1.

Die Symmetrie bezüglich der Dopplershift (positive und negative Werte) ist nicht a priori notwendig, sondern vom Kanal abhängig.

Dieses physikalische Modell berücksichtigt folglich die Geometrie des Ausbreitungsmodells des Kanals anstelle der Impulsantworten. Diese Geometrie und damit die dem jeweiligen Scatterer zugeordnete Verzögerung $\tau$ und Dopplershift $f_d$ bleibt während genügend langen Zeiten praktisch konstant, da sich Sender und/oder Empfänger nicht beliebig schnell bewegen bzw. beliebig schnelle Bewegungsänderungen durchführen können.

Im Gegensatz hierzu kann sich die Impulsantwort des Kanals im Prinzip beliebig innerhalb der zulässigen physikalischen Grenzen ändern. Die diskrete Impulsantwort errechnet sich aus den komplexen Scatterern-Koeffizienten S(m,k) zu

$$h(m,i) = \frac{1}{\sqrt{N}} \sum_{k=-K}^{K} S(m,k) e^{j2\pi\frac{ki}{N}}$$

$$h(i) = \sum_{m=0}^{M} h(i,m) \tag{1}$$

Hierbei ist K die maximal vorkommende Dopplerfrequenz, m ist der Laufindex für die Verzögerung und i ist die diskrete Laufvariable für die Zeit. h(i) ist die resultierende diskrete zeitliche Impulsantwort des Kanals. Sie wird über die Länge N betrachtet.

Die zeitvariante kontinuierliche Impulsantwort des Kanals $h(\tau,t)$ ist physikalisch in $\tau$ und $f_d$ begrenzt. Daher gilt für die Scattererfunktion $S(\tau,f_d)$ als die Fouriertransformation von $h(\tau,t)$ über t $S(\tau,f_d) = 0$ für $\tau \geq \tau_{max}$, $|f_d| \geq f_{d,max}$. In Analogie zum Abtasttheorem kann die Impulsantwort $h(\tau,t)$ daher vollständig durch Abtastwerte im Frequenzbereich dargestellt werden, so daß sich (1) als diskrete Darstellung des Kanals ergibt.

Der Maximum-Likelihood-Ansatz für die Ermittlung der Scatterer-Koeffizienten Matrix S im Zeitbereich ergibt durch die Minimierung des nachfolgenden Ausdrucks nach den Scatterer-Koeffizienten.

$$\sum_{i=0}^{N-1} \left\| r(i) - \frac{1}{\sqrt{N}} \sum_{m=0}^{M} d(i-m) \sum_{k=-K}^{K} S(m,k) e^{j2\pi\frac{ki}{N}} \right\|^2 \tag{2}$$

Hierbei wird implizit vorausgesetzt, daß die gesendeten Datensymbole d(i-m) bekannt sind. r(i) ist ein Sample des empfangenen Signals.

Die Variablen r(i) und d(i-m) sind im Zeitbereich definiert.

Die Datensymbole sind entweder direkt bekannt als Trainingsequenz vorausgesetzt oder sie werden aus dem empfangenen Signal durch die nachfolgend beschriebenen Verfahren ermittelt.

Die Schätzung der Scatterer-Koeffizienten im Zeitbereich wird vorzugsweise bei Datenübertragungsverfahren verwendet, die im Zeitbereich arbeiten. Solche Verfahren sind z.B. single carrier-Verfahren mit PSK oder QAM-Modulation.

Bei Multicarrier-Signalen mit bekannten gesendeten Symbolen könnte die Schätzung im Zeitbereich ebenfalls durchgeführt werden, da das Sendesignal a priori bekannt ist.

Den Modulationsverfahren kann in Gleichung (2) Rechnung getragen werden, indem die Datensymbole d(i-m) die jeweilige Signalform der verwendeten Modulationsart tragen, ggf. mit partial response pulse shaping. Kanäle mit großem Gedächtnis, d.h. mit langer Impulsdauer, können durch die entsprechende Wahl der maximalen Verzögerung M entzerrt werden. Hierbei wird naturgemäß auch die Beobachtungsdauer N entsprechend lang sein.

In analoger Weise zu Gleichung (2) kann eine Schätzung im Frequenzbereich durchgeführt werden. Hier ergibt sich

$$\sum_{n=0}^{N-1}\left\|R(n)-\frac{1}{\sqrt{N}}\sum_{k=-K}^{K}\sum_{m=0}^{M-1}D(n-k)S(m,k)e^{-j2\pi m\frac{n-k}{N}}\right\|^2 \qquad (3)$$

Die in (3) gegebenen Variablen R(n) und D(n-k) sind im Frequenzbereich definiert.

Die Schätzung der Scatterer-Koffizienten im Frequenzbereich wird vorzugsweise bei Datenübertragungsverfahren verwendet, die im Frequenzbereich arbeiten. Solche Verfahren sind z.B. Multicarrierverfahren wie OFDM beim DVB-T Verfahren.

Wie bei der Schätzung im Zeitbereich kann das Datensymbol D(n-k) die Signalform der verwendeten Modulationsart tragen, hier im Frequenzbereich dargestellt.

Wie aus (2) und (3) ersichtlich, werden zur Schätzung der Scatterer-Koeffizienten die gesendeten Daten als bekannt vorausgesetzt. Die Schätzung erfolgt über N Samples im Zeitbereich bzw. N spektrale Komponenten im Frequenzbereich.

Im Normalfall einer Übertragung wird zu Beginn eine bekannte Symbolfolge gesendet, die zur Synchronisation dient. Anschließend muß der Empfänger bei unbekannten Datenfolgen die Schätzung des Kanals nachführen bzw. bei erneuter Aussendung von Synchronisationsinformationen oder Trainingsymbolen neu schätzen bzw. das Konvergenzverhalten des Schätz- und Nachführalgorithmus adaptieren.

Die Schätzung der Scatterer-Koeffizienten erfolgt vorzugsweise mittels eines rekursiven Kalman- oder eines RLS-Algorithmus, bei dem nach der Initialisierung durch die bekannte Symbolfolge auch bei zunächst unbekannter Folge der Kanal nachgeführt wird.: Ein solcher RLS-Algorithmus für die Bestimmung der Scatter-Koeffizienten lautet z.B.

$$K(i) = P(i-1)\cdot D^T(i)\big(D(i)\cdot P(i-1)\cdot D^T(i)+W(i)\big)^{-1}$$
$$P(i) = P(i-1)-K(i)\cdot D(i)\cdot P(i-1)$$
$$e(i|i-1) = r(i)-D(i)\cdot \hat{S}(i-1) \qquad (4)$$
$$\hat{S}(i) = \hat{S}(i-1)+K(i)\cdot e(i|i-1)$$

Hierbei ist K(i) der Kalman-Gain, P die Predicţion State Covarianz-Matrix, D die Datenmatrix, die sich aus (2) bzw. (3) ergibt, W die Rausch-Kovarianz-Matrix und S der Vektor der geschätzten Scattererkoeffizienten, der durch die Anordnung der Scatterer in einen linearen Vektor aus der Matrix S entsteht. r(i) ist der empfangene abgetastete Signalwert (Zeit oder Frequenzbereich), i der Index in Zeit- oder Frequenzrichtung.

Die Verfahren der rekursiven Schätzung sind an sich bekannt und beispielsweise in S. Haykin, "Adpative Filter Theory", 1. Auflage, Englewood Cliffs, New Jersey, Prentice Hall 1986 beschrieben.

Es sollte erwähnt werden, daß der beschriebene RLS Algorithmus nur exemplarisch für die große Anzahl verschiedener Ausführungen erwähnt wird.

Nach der Initialschätzung des Kanals mit Hilfe von Training-Symbolen wird ein maximum-likelihood (ML)-Ansatz gewählt, bei dem für unbekannte Datenfolgen für die Gleichungen (2) und (3) eine Minimierung über alle möglichen Datenfolgen und alle möglichen Anordnungen der Scatterer durchgeführt wird.

In Verbindung mit der Kanalschätzung kann vorteilhaft ein Baumsuchverfahren eingesetzt werden. Hierbei wird, ausgehend vom durch die Trainingsfolge geschätzten Kanal, für jede der potentiell möglichen Datenfolgen vom Empfänger ein Pfad innerhalb eines Baumes aufgebaut. Für jeden dieser Pfade wird eine Kanalschätzung mit der Schätzung der Scatterer durchgeführt und eine Metrik gemäß (2) bzw. (3) errechnet. Diejenige Datenfolge mit der besten Metrik wird als die wahrscheinlich empfangene ausgegeben. Aufgrund des ML-Ansatzes ist die Metrik eine ML-Metrik.

Anstelle der Metriken gemäß (2) bzw. (3), die ja über das gesamte Beobachtungsintervall N in einem Block ermittelt werden, kann unter Berücksichtigung von (4) eine inkrementale Metrik verwendet werden

$$\Lambda(i) = \Lambda(i-1)+e(i|i-1)\cdot(r(i)-D(i)^H\hat{S}(i)) \qquad (5)$$

Dieses Baumsuchverfahren ist schematisch in Fig. 2 für binäre Symbole dargestellt, λ(x,...y) bezeichnet die Metrik für die angenommenen Symbole x..y, S die Matrix der für den jeweiligen Pfad ermittelten Scatterer. Die Anzahl der Indizes gibt die Tiefe des Baumes an, im Beispiel bis maximal drei. Der zusätzlich markierte Pfad kennzeichnet den über die Metrik momentan ausgewählten besten Pfad.

Der beschriebene Algorithmus ist ein soft output-Algorithmus, der neben den demodulierten Daten auch noch ein Gütemaß für die Demodulation in Form der Metrik ausgeben kann. Demgemäß ist es möglich, nicht nur die als wahrscheinlichste ermittelte Datenfolge auszugeben, sondern auch noch weniger wahrscheinliche. Hiermit können im Empfänger nachgeschaltete Verarbeitungsstufen, z.B. Decodierer, Zusatzinformationen erhalten, die sich auf Qualität des Empfangs positiv auswirken.

So ist es möglich, daß mehrere Datensequenzen in den nachfolgenden Verarbeitungsstufen weiterverarbeitet werden und erst dann eine Entscheidung über die tatsächlich empfangene Sequenz durchgeführt wird.

Das Verfahren läßt sich weiterhin vorteilhaft mit einem Faltungs- oder auch Blockcode als alleinigem oder innerem Code einer verketteten Code-Struktur kombinieren. Es ist bekannt, daß sich Faltungs- und Block-Codes in Form von Baumstrukturen darstellen lassen. Ein Code wirkt sich auf die o.a. Baumstruktur so aus, daß nicht alle Pfade, die bei Nichtberücksichtigung des Codes möglich wären, auch wirklich existieren. Daher wird ein solcher Baum bei Berücksichtigung von Codeinformationen nicht alle Pfade beinhalten.

Mit dieser Kombination erhält man eine kombinierte Kanalschätzung und -entzerrung, Demodulation und Decodierung, die als "sequential decoding" bezeichnet wird. Dieses Verfahren ist bekannt, neu ist jedoch die Anwendung in Verbindung mit der Bestimmung der Scatterer-Koeffizienten.

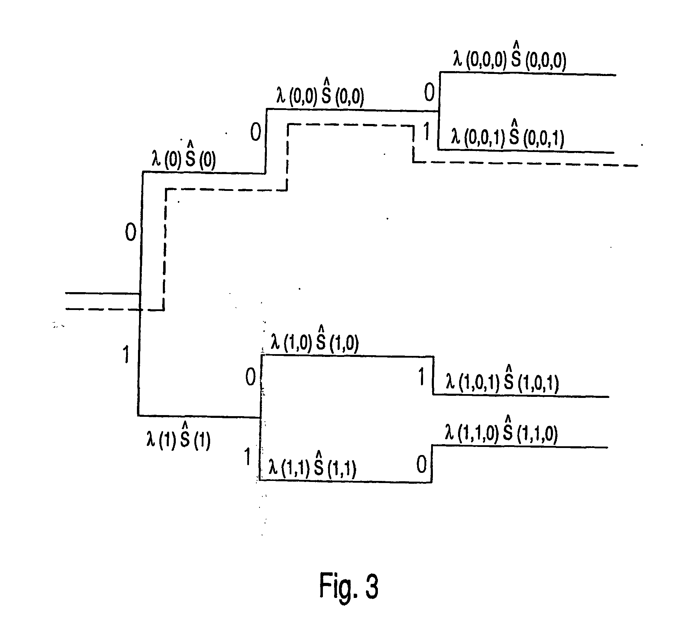

Ein aus dem Beispiel von Fig. 2 abgeleiteter Baum ist in Fig. 3 dargestellt. Durch Vergleich der beiden Bäume wird deutlich, daß durch den Code bestimmte Pfade nicht existent sind.

Bei mehrwertigen Datensymbolen bzw. langen Datensequenzen ergeben sich im Verlauf der Verarbeitung sehr viele Pfade, für die jeweils die Metriken und die Scatterermatrizen sowie weitere Hilfsgrößen für die Algorithmen errechnet und gespeichert werden müssen. Zur Reduktion des Rechenaufwands und Speicheraufwands kann die Zahl der verfolgten Pfade reduziert werden. Hierbei werden die Gesamtzahl der Pfade auf eine maximale Größe, die von der zur Verfügung stehenden Rechenleistung sowie vom Speicherbedarf des Empfängers abhängt, begrenzt. Hierbei können die bekannten Metrik-First, Breadth-First oder auch Depth-First Algorithmen verwendet werden.

Bekannte spezielle Verfahren der Entzerrung mit Baumsuche haben Nachteile bei Kanälen mit langen Impulsantworten, bei denen ein Großteil der Energie eines Datensymbols am Ende der Impulsantwort zu liegen kommt und daher a priori bei der Schätzung des empfangenen Symbols diese Energie nicht berücksichtigt wird. Hier muß entweder durch eine entsprechende zusätzliche Verzögerung erst die gesamte Impulsantwort abgewartet werden oder durch zusätzliche Schätzverfahren mit Modellierung dieser Einflüsse als Rauschen berücksichtigt werden. Bei der ersten Variante entstehen viele zusätzliche Pfade, die in der Berechnung berücksichtigt werden müssen, auch wenn sie nachher wieder verworfen werden. Wird das Verfahren in allgemeinen und unbekannten Kanälen eingesetzt, muß immer mit der maximalen Kanalimpulslänge gerechnet und damit der Algorithmus a priori darauf ausgelegt werden.

Das Verfahren gemäß der Erfindung vermeidet diese Nachteile zwar nicht a priori. Da der Kanal jedoch mit Hilfe der Scatterer modelliert wird, kann durch Ermittlung der relevanten Scatterer die maximal vorkommende Verzögerung und damit die Dimension der Scatterermatrix bestimmt werden. Während bei bekannten Verfahren diese maximale Länge immer berücksichtigt werden muß, kann beim erfindungsgemäßen Verfahren adaptiv auf die maximale Verzögerung des Kanals eingegangen und die notwendige Verzögerung bei der Demodulation und Decodierung entsprechend eingestellt werden. Daher wird nur in speziellen Kanälen, bei denen nennenswerte Scatterer bei hohen Verzögerungen auftreten, die große zusätzliche Verzögerung bei der Demodulation und Codierung notwendig werden. Da sich die Geometrie der Scatterer nicht sprunghaft ändert, kann beim Auftreten eines Scatterers mit großer Verzögerung die Dimension der Scatterermatrix adaptiv erhöht werden. Umgekehrt ist es auch möglich, daß beim Verschwinden eines solchen Scatterers die Dimension der Matrix adaptiv verkleinert wird.

Die Entscheidung läßt sich aus (2) formelmäßig wie folgt darstellen

$$\hat{d}(0..N-L-1)=\operatorname*{arg\,min}_{\substack{d(0..N-L-1)d(N-L..N-1)\\S(m,k)}}\left(\sum_{i=0}^{N-1}\left\|r(i)-\frac{1}{\sqrt{N}}\sum_{m=0}^{M}d(i-m)\sum_{k=-K}^{K}S(m,k)e^{j2\pi\frac{ki}{N}}\right\|^2\right)\quad(6)$$

Hierbei ist L die notwendige Verzögerung. Das Minimum wird über alle möglichen Datenhypothesen *d* und alle möglichen Scatterer *S* ermittelt.

Neben einer Optimierung der Dimension der Scatterermatrix bezüglich Verzögerung kann auch noch eine Optimierung bezüglich der maximal auftretenden Dopplershift erfolgen.

Bei der Entzerrung und Demodulation von single carrier Verfahren können die gesendeten Daten nur ISI in Zeitrichtung verursachen, d.h. in der Vergangeneheit gesendete Daten beeinflussen zeitlich später gesendete.

Beim Empfang von Multicarrier-Signalen, z.B. OFDM, ergibt sich aufgrund des ICI im Frequenzbereich, daß ein bestimmter Träger sowohl von benachbarten Trägern in positiver wie auch negativer Frequenzrichtung beeinflußt wird.

Zusätzlich muß beachtet werden, daß sich im Frequenzbereich eine zyklische Fortsetzung der Träger ergibt. Diese zyklische Fortsetzung kann in der Datenmatrix D berücksichtigt werden, indem die in (3) auftretenden Datensymbole D(n-k) mit negativem Index entsprechend besetzt werden.

Durch eine ähnliche Berücksichtigung "zukünftiger" Ereignisse, d.h. Daten von höheren Frequenzen, durch entsprechende Verzögerung der Entscheidungen, wie bei der Berücksichtigung langer Verzögerungen in der Kanalimpulsantwort bei der Verarbeitung im Zeitbereich, kann dieser Einfluß berücksichtigt und kompensiert werden. Auch hier kann die Scatterermatrix adaptiv angepaßt werden.

Mit (3) in (6) eingesetzt ergibt sich eine analoge Entscheidung für Multicarrier-Verfahren.

Das beschriebene Verfahren kann auch ohne die Initialisierung durch Training-Sequenzen arbeiten. In diesem Fall wird die Verarbeitung mit default-Werten initialisiert, z.B. wird die Matrix P aus (4) als Einheitsmatrix vorbesetzt und der Scatterervektor S zu Null initialisiert. Der Algorithmus wird dann in der Regel langsamer konvergieren. Weiterhin müssen alle möglichen Anfangskonfigurationen für die Datenfolgen berücksichtigt werden.

**Patentansprüche**

1. Verfahren zur Entzerrung und Demodulation eines über einen zeitveränderlichen Kanal nach einem Einzelträger- oder Mehrträger-Datenübertragungsverfahren zu einem Empfänger übertragenen Datensignals,
   **dadurch gekennzeichnet,**
   **daß** im Empfänger aus dem empfangenen Datensignal die Streuer-Koeffizienten Dämpfung, Verzögerung und Dopplerfrequenz derjenigen Streuer bestimmt werden, welche die Signalverzerrungen im Kanal hervorrufen, und mit diesen so ermittelten Streuer-Koeffizienten das Datensignal entzerrt und anschließend demoduliert wird.

2. Verfahren nach Anspruch 1,
   **dadurch gekennzeichnet,**
   **daß** die Bestimmung der Streuer-Koeffizienten und die Entzerrung des Datensignals im Zeitbereich erfolgt.

3. Verfahren nach Anspruch 2,
   **gekennzeichnet durch**
   seine Anwendung bei Einzelträger-Datenübertragungsverfahren.

4. Verfahren nach Anspruch 2,
   **gekennzeichnet durch**
   seine Anwendung bei Mehrträger-Datenübertragungsverfahren bei Empfang von bekannten Datenfolgen.

5. Verfahren nach Anspruch 1,
   **dadurch gekennzeichnet,**
   **daß** die Bestimmung der Streuer-Koeffizienten und die Entzerrung des Datensignals im Frequenzbereich erfolgt.

6. Verfahren nach Anspruch 5,
   **gekennzeichnet durch**
   seine Anwendung bei Mehrträger-Datenübertragungsverfahren.

7. Verfahren nach einem der vorhergehenden Ansprüche,
   **dadurch gekennzeichnet,**
   **daß** die Streuer-Koeffizienten über ein maximum-likelihood-Kriterium bestimmt werden.

8. Verfahren nach Anspruch 7,
   **dadurch gekennzeichnet,**
   **daß** die Streuer-Koeffizienten als Minimum der euklidischen Distanz zwischen dem Empfangssignal sowie den im Empfänger demodulierten Daten des Empfangssignals und aller möglichen Streuer-Koeffizienten ermittelt werden (Formeln 2 und 3).

9. Verfahren nach einem der vorhergehenden Ansprüche,
**dadurch gekennzeichnet,**
**daß** eine erste Bestimmung der Streuer-Koeffizienten mit Hilfe einer bekannten Datensequenz durchgeführt wird.

10. Verfahren nach Anspruch 9,
**dadurch gekennzeichnet,**
**daß** die erste Bestimmung der Streuer-Koeffizienten blockweise über eine gesamte Datensequenz durchgeführt wird.

11. Verfahren nach einem der vorhergehenden Ansprüche 1 bis 6 sowie 9 und 10,
**dadurch gekennzeichnet,**
**daß** für die Bestimmung der Streuer-Koeffizienten ein Kalman-Algorithmus iterativ benutzt wird.

12. Verfahren nach einem der vorhergehenden Ansprüche 1 bis 6 sowie 9 und 10,
**dadurch gekennzeichnet,**
**daß** für die Bestimmung der Streuer-Koeffizienten ein recursive-least-square Algorithmus iterativ benutzt wird.

13. Verfahren nach Anspruch 9 oder 10,
**dadurch gekennzeichnet,**
**daß** die bei der ersten Bestimmung ermittelten Streuer-Koeffizienten für den anschließenden Nutzdatenempfang benutzt werden, wobei die Daten blockweise über eine gesamte Datensequenz entzerrt und demoduliert werden und mit den so blockweise entzerrten und demodulierten Daten die bei der ersten Bestimmung ermittelten Streuer-Koeffizienten korrigiert werden.

14. Verfahren nach Anspruch 9 oder 10,
**dadurch gekennzeichnet,**
**daß** die bei der ersten Bestimmung ermittelten Streuer-Koeffizienten für den anschließenden Nutzdatenempfang benutzt werden, wobei mit den entzerrten und demodulierten Daten die bei der ersten Bestimmung ermittelten Streuer-Koeffizienten nach einem Kalman- oder recursive-least-square-Algorithmus korrigiert werden.

15. Verfahren nach Anspruch 13 oder 14,
**dadurch gekennzeichnet,**
**daß** zur Korrektur der Streuer-Koeffizienten sowie für die Datendemodulation ein Baumsuchverfahren eingesetzt wird, bei dem für alle möglichen Datenfolgen jeweils die Streuer-Koeffizienten sowie die Metriken bestimmt werden und aus der Baumstruktur dann diejenigen Datenfolgen ausgewählt werden, welche die beste maximum-likelihood-Metrik besitzen.

16. Verfahren nach Anspruch 15,
**dadurch gekennzeichnet,**
**daß** die den ausgewählten besten Datenfolgen entsprechenden Streuer-Koeffizienten im Weiteren zur Entzerrung und Demodulation benutzt werden.

17. Verfahren nach Anspruch 15 oder 16,
**dadurch gekennzeichnet,**
**daß** die Auswahl der Datenfolgen blockweise für die gesamte betrachtete Datensequenz erfolgt.

18. Verfahren nach Anspruch 15 oder 16,
**dadurch gekennzeichnet,**
**daß** die Auswahl der Datenfolgen nach Erreichen einer vorgegebenen Pfadtiefe des Baumes durchgeführt wird.

19. Verfahren nach Anspruch 15 bis 18,
**dadurch gekennzeichnet,**
**daß** beim Baumsuchverfahren ein Metrik-First-Algorithmus benutzt wird.

20. Verfahren nach Anspruch 15 bis 18,
**dadurch gekennzeichnet,**
**daß** beim Baumsuchverfahren ein Breadth-First-Algorithmus benutzt wird.

**21.** Verfahren nach Anspruch 15 bis 18,
**dadurch gekennzeichnet,**
**daß** beim Baumsuchverfahren ein Depth-First-Algorithmus benutzt wird.

**22.** Verfahren nach Anspruch 15 bis 21,
**dadurch gekennzeichnet,**
**daß** beim Baumsuchverfahren die Pfadtiefe bzw. die Anzahl der Pfade adaptiv gemäß den ermittelten Streuer-Koeffizienten variiert wird.

**23.** Verfahren nach einem der Ansprüche 15 bis 22,
**dadurch gekennzeichnet,**
**daß** bei der Ausgabe der demodulierten Datenfolge der Metrikwert mit ausgegeben wird.

**24.** Verfahren nach Anspruch 15 bis 22,
**dadurch gekennzeichnet,**
**daß** zusätzlich zur Datenfolge mit der besten maximum-likelihood-Metrik auch noch weitere nächstbeste Datenfolgen mit nächstbester maximum-likelihood-Metrik ausgegeben werden.

**25.** Verfahren nach einem der Ansprüche 15 bis 24,
**dadurch gekennzeichnet,**
**daß** beim Empfang von nach einem Code codierten Datensignalen beim Baumsuchverfahren nur die gültigen Codewörtern entsprechenden Datenfolgen berücksichtigt werden.

**26.** Verfahren nach Anspruch 25,
**dadurch gekennzeichnet,**
**daß** beim Baumsuchverfahren unter Berücksichtigung des Codes zusätzlich ein Viterbi- oder APP-Algorithmus benutzt wird.

**27.** Verfahren nach einem der vorhergehenden Ansprüche,
**dadurch gekennzeichnet,**
**daß** die erste Bestimmung der Streuer-Koeffizienten nur mit unbekannten Nutzdatenfolgen durchgeführt wird und bei der Initialisierung der Algorithmen anstelle von Training- und Synchronisationssequenzen default-Werte verwendet werden.

**28.** Verfahren nach einem der Ansprüche 7 bis 10,
**dadurch gekennzeichnet,**
**daß** die maximale Anzahl der zu berücksichtigenden Streuer-Koeffizienten in den Algorithmen anhand der jeweils vorher ermittelten Streuer-Koeffizienten angepaßt wird.

**Claims**

**1.** Method for equalising and demodulating a data signal transmitted using a single-carrier or multi-carrier data-transmission scheme via a time-variant channel to a receiver,
**characterised in that**
the scatterer coefficients, attenuation, delay and Doppler frequency, in the received data signal, which cause signal distortion in the channel, are measured in the receiver, and that the data signal is equalised with the scatterer coefficients determined in this manner and then demodulated.

**2.** Method according to claim 1
**characterised in that**
the measurement of the scatterer coefficients and the equalisation of the data signal takes place within the time domain.

**3.** Method according to claim 2,
**characterised by**
its use in the context of single-carrier data transmission schemes.

**4.** Method according to claim 2,
**characterised by**
its use in the context of multi-carrier data transmission schemes for receiving known data sequences.

**5.** Method according to claim 1,
**characterised in that**
the measurement of the scatterer coefficients and the equalisation of the data signal take place within the frequency domain.

**6.** Method according to claim 5,
**characterised by**
its use in the context of multi-carrier data transmission schemes.

**7.** Method according to any one of the preceding claims
**characterised in that**
the scatterer coefficients are measured via a maximum likelihood criterion.

**8.** Method according to claim 7,
**characterised in that**
the scatterer coefficients are determined as a minimum of the Euclidian distance between the received signal, the data of the received signal demodulated in the receiver and all possible scatterer coefficients (formulae 2 and 3).

**9.** Method according to any one of the preceding claims,
**characterised in that**
a first measurement of the scatterer coefficients is implemented with the assistance of a known data sequence.

**10.** Method according to claim 9,
**characterised in that**
the first measurement of the scatterer coefficients is implemented block-wise over an entire data sequence.

**11.** Method according to any one of the preceding claims 1 to 6 and 9 and 10,
**characterised in that**
a Kalman algorithm is used iteratively for the measurement of the scatterer coefficients.

**12.** Method according to any one of the preceding claims 1 to 6 and 9 and 10,
**characterised in that**
a recursive-least-square algorithm is used iteratively for the measurement of the scatterer coefficient.

**13.** Method according to claim 9 or 10,
**characterised in that**
the scatterer coefficients determined in the first measurement are used for receiving the associated user data, wherein the data are equalised and demodulated block-wise over an entire data sequence, and the scatterer coefficients determined in the first measurement are corrected with reference to the data equalised and demodulated in this block-wise manner.

**14.** Method according to claim 9 or 10,
**characterised in that**
the scatterer coefficients determined in the first measurement are used for receiving the associated user data, wherein the scatterer coefficients determined in the first measurement are corrected according to a Kalman or recursive-least-square algorithm with reference to the data equalised and demodulated.

**15.** Method according to claim 13 or 14,
**characterised in that**
a tree-search procedure is used for correction of the scatterer coefficients and for data demodulation, wherein, the scatterer coefficients and metrics are measured, in each case, for all possible data sequences, and those data sequences, which provide the best maximum-likelihood-metric, are then selected from the tree structure.

**16.** Method according to claim 15,

**characterised in that**
the scatterer coefficients corresponding to the selected best data sequences are used for subsequent equalisation and demodulation.

**17.** Method according to claim 15 or 16,
**characterised in that**
the selection of data sequences is carried out block-wise for the entire data sequence observed.

**18.** Method according to claim 15 or 16,
**characterised in that**,
the data sequences are selected after a predetermined path depth of the tree has been reached.

**19.** Method according to claim 15 to 18,
**characterised in that**
a metric-first algorithm is used in the tree search procedure.

**20.** Method according to claim 15 to 18,
**characterised in that**,
a breadth-first algorithm is used in the tree-search procedure.

**21.** Method according to claim 15 to 18,
**characterised in that**
a depth-first algorithm is used in the tree-search procedure.

**22.** Method according to claim 15 to 21,
**characterised in that**
the path depth and/or the number of paths is varied adaptively in the tree-search procedure according to the scatterer coefficients determined.

**23.** Method according to any one of claims 15 to 22,
**characterised in that**
the metric value is also presented in the output of the demodulated data sequence.

**24.** Method according to claim 15 to 22,
**characterised in that**
in addition to the data sequence with the best maximum-likelihood metric, other, next-best data sequences with a next-best-likelihood metric are also presented.

**25.** Method according to any one of claims 15 to 24,
**characterised in that**,
when receiving data signals coded according to a code, exclusively data sequences corresponding to valid code words are included in the tree-search procedure.

**26.** Method according to claim 25,
**characterised in that**
in addition to taking the code into consideration, a Viterbi algorithm or APP algorithm is used in the tree-search procedure.

**27.** Method according to any one of the preceding claims
**characterised in that**
the first measurement of scatterer coefficients is implemented exclusively with unknown user data sequences, and that default values are used in the initialisation of the algorithm instead of the training and synchronisation sequences.

**28.** Method according to any one of claims 7 to 10,
**characterised in that**
the maximum number of scatterer coefficients to be included in the algorithms is adapted in each case on the basis of the scatterer coefficients previously determined.

**Revendications**

1.  Procédé d'égalisation et de démodulation d'un signal de données transmis à un récepteur par l'intermédiaire d'un canal variable dans le temps selon un procédé de transmission de données de monoporteuse ou de multiporteuse,
    **caractérisé en ce que**
    dans le récepteur, on détermine à partir du signal de données reçu les coefficients de diffuseurs amortissement, temporisation et fréquence de Doppler des diffuseurs qui entraînent les distorsions de signal dans la voie, et le signal de données est égalisé et ensuite démodulé avec ces coefficients de diffuseurs ainsi calculés.

2.  Procédé selon la revendication 1,
    **caractérisé en ce que**
    le calcul des coefficients de diffuseurs et l'égalisation du signal de données s'effectuent dans la plage de temps.

3.  Procédé selon la revendication 2,
    **caractérisé par**
    son application avec les procédés de transmission de données de monoporteuse.

4.  Procédé selon la revendication 2,
    **caractérisé par**
    son application avec des procédés de transmission de données de multiporteuse en cas de réception de séquences de données connues.

5.  Procédé selon la revendication 1,
    **caractérisé en ce que**
    le calcul des coefficients de diffuseurs et l'égalisation du signal de données s'effectuent dans la plage de fréquence.

6.  Procédé selon la revendication 5,
    **caractérisé par**
    son application avec des procédés de transmission de données de multiporteuse.

7.  Procédé selon l'une quelconque des revendications précédentes,
    **caractérisé en ce que**
    les coefficients de diffuseurs sont déterminés au moyen d'un critère de la plus grande vraisemblance.

8.  Procédé selon la revendication 7,
    **caractérisé en ce que**
    les coefficients de diffuseurs sont déterminés en tant que minimum de la distance euclidienne entre le signal de réception et les données, démodulés dans le récepteur, du signal de réception et de tous les coefficients de diffuseurs possibles (formules 2 et 3).

9.  Procédé selon l'une quelconque des revendications précédentes,
    **caractérisé en ce que**
    un premier calcul des coefficients de diffuseurs est effectué à l'aide d'une séquence de données connue.

10. Procédé selon la revendication 9,
    **caractérisé en ce que**
    le premier calcul des coefficients de diffuseurs est effectué par bloc au moyen d'une séquence de données globale.

11. Procédé selon l'une quelconque des revendications précédentes 1 à 6 ainsi que 9 et 10,
    **caractérisé en ce que**
    un algorithme de Kalman est utilisé de façon itérative pour le calcul des coefficients de diffuseurs.

12. Procédé selon l'une quelconque des revendications précédentes 1 à 6 ainsi que 9 et 10,
    **caractérisé en ce que**
    un algorithme de recursive-least-square est utilisé de façon itérative pour le calcul des coefficients de diffuseurs.

**13.** Procédé selon la revendication 9 ou 10,
**caractérisé en ce que**
les coefficients de diffuseur calculés lors du premier calcul sont utilisés pour la réception consécutive de données utiles, les données étant égalisées et démodulées par bloc au moyen d'une séquence de données globale et les coefficients de diffuseurs calculés lors du premier calcul étant corrigés avec les données ainsi égalisées et démodulées par bloc.

**14.** Procédé selon la revendication 9 ou 10,
**caractérisé en ce que**
les coefficients de diffuseurs calculés lors du premier calcul sont utilisés pour la réception ultérieure de données utiles, les coefficients de diffuseur calculés lors du premier calcul étant corrigés avec les données égalisées et démodulées selon un algorithme de Kalman ou de recursive-least-square.

**15.** Procédé selon la revendication 13 ou 14,
**caractérisé en ce que**
pour la correction des coefficients de diffuseurs ainsi que pour la démodulation de données, on utilise un procédé de recherche d'arbre dans lequel, pour toutes les séquences de données possibles, on détermine respectivement les coefficients de diffuseurs et les métriques et on sélectionne ensuite à partir de la structure d'arbre les séquences de données qui présentent la meilleure métrique de la plus grande vraisemblance.

**16.** Procédé selon la revendication 15,
**caractérisé en ce que**
les coefficients de diffuseurs correspondants aux meilleures séquences de données sélectionnées sont utilisés ultérieurement pour l'égalisation et la démodulation.

**17.** Procédé selon la revendication 15 ou 16,
**caractérisé en ce que**
le choix des séquences de données s'effectue par bloc pour l'ensemble de la séquence de données considérée.

**18.** Procédé selon la revendication 15 ou 16,
**caractérisé en ce que**
le choix des séquences de données est effectué après avoir atteint une profondeur de chemin prédéfinie de l'arbre.

**19.** Procédé selon les revendications 15 à 18,
**caractérisé en ce que**
on utilise un algorithme de Metric-First avec le procédé de la recherche d'arbre.

**20.** Procédé selon les revendications 15 à 18,
**caractérisé en ce que**
on utilise un algorithme de Breadth-First avec le procédé de recherche d'arbre.

**21.** Procédé selon les revendications 15 à 18,
**caractérisé en ce que**
on utilise un algorithme de Depth-First avec le procédé de recherche d'arbre.

**22.** Procédé selon les revendications 15 à 21,
**caractérisé en ce que**
avec le procédé de recherche d'arbre, la profondeur de chemin et le nombre de chemins sont modifiés de façon adaptative selon les coefficients de diffuseurs calculés.

**23.** Procédé selon l'une quelconque des revendications 15 à 22,
**caractérisé en ce que**
la valeur de métrique est éditée également lors de l'édition de la séquence de données démodulée.

**24.** Procédé selon les revendications 15 à 22,
**caractérisé en ce que**
en supplément de la séquence de données, on édite avec la meilleure métrique de la plus grande vraisemblance également d'autres prochaines séquences de données optimales avec une prochaine métrique optimale de la plus grande vraisemblance.

**25.** Procédé selon l'une quelconque des revendications 15 à 24,
**caractérisé en ce que**
lors de la réception de signaux de données codés selon un code avec le procédé de la recherche d'arbre, on prend en compte seulement les séquences de données correspondant à des mots de code valables.

**26.** Procédé selon la revendication 25,
**caractérisé en ce que**
avec le procédé de recherche d'arbre, on utilise en supplément un algorithme de Viterbi ou un algorithme APP en tenant compte du code.

**27.** Procédé selon l'une quelconque des revendications précédentes,
**caractérisé en ce que**
le premier calcul des coefficients de diffuseurs n'est effectué qu'avec des séquences inconnues de données utiles et **en ce que**, lors de l'initialisation des algorithmes, on utilise des valeurs par défaut au lieu de séquences d'entraînement et de synchronisation.

**28.** Procédé selon l'une quelconque des revendications 7 à 10,
**caractérisé en ce que**
le nombre maximal des coefficients de diffuseurs à prendre en compte est adapté dans les algorithmes à l'aide des coefficients de diffuseurs calculés respectivement auparavant.

Fig. 1

Fig. 2

Fig. 3